# EUROPÄISCHE PATENTSCHRIFT

(11) **EP 1 223 059 B1**
(45) Veröffentlichungstag und Bekanntmachung des Hinweises auf die Patenterteilung: **08.02.2006**
(21) Anmeldenummer: 01126363.9
(22) Anmeldetag: 07.11.2001
(51) Int. Cl.: B60H 1/00

(54) **Verfahren und Anordnung zur Mischluftregelung in einer Heizungs- oder Klimaanlage eines Kraftfahrzeuges**
Method and device for controlling the mixing of air in a vehicle air conditioning
Procédé et dispositif de régulation du mélange d'air dans une installation de climatisation de véhicule

(30) Priorität: 15.01.2001 DE 10101700
(43) Veröffentlichungstag der Anmeldung: 17.07.2002
(73) Patentinhaber: Behr GmbH & Co. KG, 70469 Stuttgart (DE)
(72) Erfinder: Kemle, Andreas, Dipl.-Ing, 74321 Bietigheim-Bissingen (DE); Möllert, Thorsten, 70376 Stuttgart (DE); Riegel, Harald, Dr.-Ing., 70499 Stuttgart (DE); Schweizer, Gebhard, Dipl.-Ing., 71229 Leonberg (DE)
(74) Vertreter: Grauel, Andreas

(56) Entgegenhaltungen:
- US-A- 5 934 987
- US-A- 5 971 287
- US-A- 6 016 967

## Beschreibung

Die Erfindung betrifft ein Verfahren und eine Anordnung zur Mischluftregelung in einer Heizungs- oder Klimaanlage eines Kraftfahrzeuges gemäß den Oberbegriffen der Ansprüche 1 und 9.

Aus der DE 196 32 059 A1 ist eine Klimaanlage und ein Verfahren zum Betreiben der Klimaanlage bekannt, bei der zur Optimierung des Energieverbrauchs der Klimaanlage zugeführten Frischluft bedarfsweise Umluft zugemischt wird. Da die Umluft je nach Jahreszeit und Einstellungen der Klimaanlage bereits teilweise abgekühlt bzw. erwärmt ist, kann somit durch Zumischen von Umluft Energie eingespart werden, da die Mischluft auf diese Weise vorgekühlt bzw. vorerwärmt wird. Da die Umluft, hauptsächlich wegen der Feuchtigkeitsabgabe der Fahrzeuginsassen, im Regelfall einen höheren Feuchtigkeitsgehalt hat, sind gemäß DE 196 32 059 A1 Feuchtigkeitssensoren zur Bestimmung der Luftfeuchtigkeit im Innenraum vorgesehen, so daß der Feuchtigkeitsgehalt der dem Innenraum zugeführten Mischluft begrenzt bleibt durch begrenztes Zumischen von Umluft.

Nachteilig an diesem Verfahren ist, daß permanent Umluft zugemischt wird, auch wenn dies nicht notwendig ist, so daß der Feuchtigkeitsgehalt der Mischluft sich stets am oberen Grenzwert befindet. Außerdem sind zur Durchführung dieses bekannten Verfahrens mehrere Temperatur- und Feuchtigkeitssensoren notwendig, die zusätzliche Kosten bewirken.

Dokument US 6 016 967 offenbart ein Verfahren gemäß das erste Teil des Anspruchs 1 und eine Anordnung gemäß das erste Teil des Anspruchs 9.

Ausgehend von diesem Stand der Technik ist es Aufgabe der Erfindung eine weiteres Verfahren zur Optimierung des Energieverbrauchs für Heiz-/Klimaanlagen eines Kraftfahrzeuges anzugeben, daß insbesondere einfacher ausgestaltet ist und eine einfachere und damit kostengünstigere Anordnung zur Mischluftregelung erlaubt.

Diese Aufgabe wird gelöst durch ein Verfahren mit den Merkmalen des Anspruchs 1 sowie eine Anordnung mit den Merkmalen des Anspruchs 9.

Das erfindungsgemäße Verfahren zeichnet sich dadurch aus, daß der Umluftanteil in Abhängigkeit der Stellung der Luftstromsteuerelemente zur Verteilung der konditionierten Luft bestimmt wird. Damit ist sichergestellt, daß in bestimmten Luftverteilungsmodi ein maximal zulässiger Umluftanteil beigemischt wird und beispielsweise in einem Defrostmodus ausschließlich Frischluft zugeführt wird. Es werden keine zusätzlichen Temperatur- oder Feuchtigkeitssensoren benötigt und Umluft wird nur dann zugemischt, wenn ein höherer Feuchtigkeitsgehalt im Fahrzeuginnenraum möglich ist.

Durch ein Beimischen von Umluft kann im Kaltstart nicht nur der Fahrzeuginnenraum schneller erwärmt werden, sondern auch das Kühlwasser schneller erwärmt werden, was zu einer Kraftstoffeinsparung führt.

Vorteilhafterweise sollte die Umluftzufuhr bei Einstellung der Luftstromsteuerelemente in einem Defrostmodus vollständig abgesperrt sein, da beim Defrosten der Windschutzscheibe die in den Innenraum zugeführte Luft so trocken wie möglich sein sollte.

Der maximal zulässige Anteil von Umluft, der vorzugsweise dann eingestellt wird, wenn ein Großteil der konditionierten Luft zu Fußraumausströmern und/oder zu in der Mittelebene des Fahrzeugs angeordnete Mittenausströmern (oder auch Mannanströmer genannt) geführt wird, kann fest vorgegeben sein, beispielsweise 30 %. Der maximale Anteil kann vorteilhafterweise abhängig von bestimmten Parametern gewählt werden. Diese Parameter können beispielsweise die Anzahl der Fahrzeuginsassen sein, so daß in einem voll besetzten Fahrzeug der Umluftanteil geringer ist, um die durch die Fahrzeuginsassen in den Innenraum vermehrt eingebrachte Luftfeuchtigkeit zu berücksichtigen. Auch könnte der maximale Umluftanteil länderspezifsch eingestellt werden, so daß der maximale Umluftanteil davon abhängig eingestellt ist, in welches Land das Fahrzeug verkauft wird.

Weiter ist es vorteilhaft, daß der Umluftanteil in Abhängigkeit einer vorgebbaren Heizleistung geregelt wird, indem beispielsweise lediglich im Bereich zwischen 80 und 100 % der Maximalleistung Umluft zugemischt wird. Dadurch wird einerseits bei maximalem Heizen Energie gespart, durch die Beimischung von bereits erwärmter Umluft, wobei ein Beschlagen der Scheiben hier nicht zu befürchten ist, da wärmere Luft einen höheren Feuchtigkeitsgehalt enthalten kann und bei voller Heizleistung ein Beschlagen nicht zu befürchten ist. Eine Heizleistung zwischen 80 und 100 % ist in der Regel nur bei Fahrtbeginn nach einem Kaltstart notwendig, so daß durch die erfindungsgemäße Maßnahme der Innenraum schneller erwärmt werden kann. Bei bereits erwärmtem Fahrzeug und Motor wird die Heizleistung in der Regel kleiner als 80 % der Maximalleistung sein. Dann empfiehlt es sich ausschließlich Frischluft zuzuführen, wodurch der Innenraum des Fahrzeugs getrocknet werden kann.

Es ist vorteilhaft, bei kleiner Gebläseleistung keine Umluft zuzuführen, da ansonsten durch den im Frischluftkanal während der Fahrt vorhandenen Staudruck Frischluft unmittelbar über den Umluftkanal in den Fahrzeuginnenraum unbehandelt gelangen könnte. Mit steigender Gebläseleistung kann auch der Umluftanteil erhöht werden.

Da der Staudruck abhängig ist von der Fahrgeschwindigkeit kann vorteilhafterweise der Umluftanteil in Abhängigkeit der Geschwindigkeit geregelt werden. Bei geringer Geschwindigkeit und damit geringem Staudruck könnte bereits bei kleiner Gebläseleistung ein Umluftanteil beigemischt werden.

Vorteilhafterweise weist eine Anordnung zur Durchführung des Verfahrens eine Steuereinheit auf, die derart ausgebildet ist, daß von der Steuereinheit ausgehende Signale zur Öffnung der Umluftansaugöffnung abhängig sind von den Stellungen der Luftstromsteuerelemente. Diese Steuereinheit könnte einen Mikroprozessor mit einem entsprechenden Computerprogramm aufweisen zur Steuerung der Luftstromsteuerelemente und der Umluft/Frischluftklappe bzw. -klappen.

Im Folgenden wird die Erfindung anhand eines Ausführungsbeispiels unter Bezugnahme auf die Zeichnung im einzelnen erläutert. In der Zeichnung zeigen:
- Fig. 1: eine schematische Darstellung einer erfindungsgemäßen Anordnung zur Mischluftregelung in einer Heizungs- oder Klimaanlage;

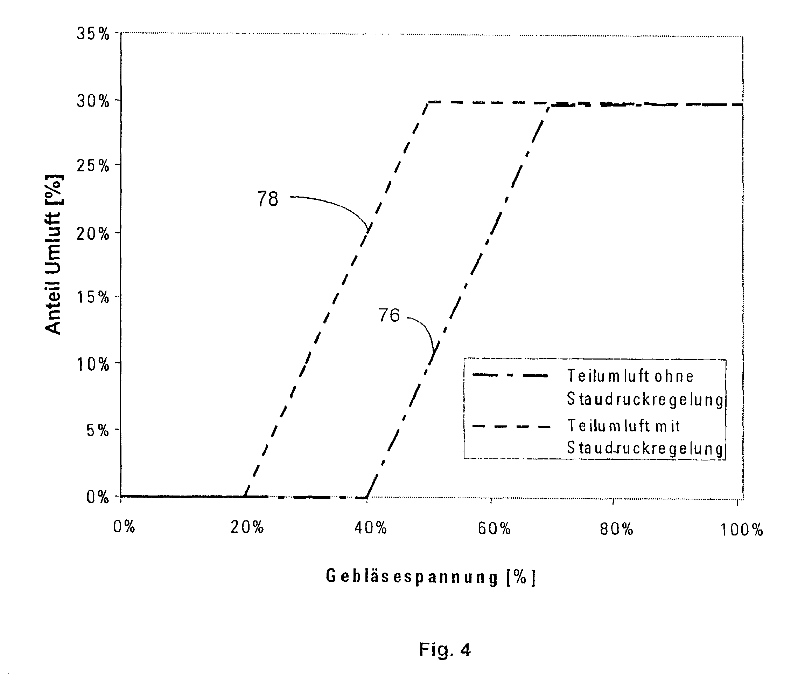

- Fig. 2 bis 4: Diagramme zur Darstellung des Umluftanteils in Abhängigkeit verschiedener Parameter.

Eine erfindungsgemäße Anordnung 10 zur Mischluftregelung in einer Heizungs- oder Klimaanlage eines Kraftfahrzeuges weist ein Luftführungsgehäuse 12 eines Klimageräts auf. Das Luftführungsgehäuse 12 enthält ein Gebläse 14, dem über eine Frischluftöffnung 16 Frischluft und/oder über eine Umluftöffnung 18 Umluft zuführbar ist. Ein Luftstromsteuerelement 20, beispielsweise eine Frischluft-/Umluftklappe, dient zur Regelung des Mischungsverhältnisses von Frischluft zu Umluft, das je nach Klappenstellung einstellbar ist. Anstelle der Frischluft-/Umluftklappe 20 könnten auch zwei einzelne Luftklappen vorgesehen sein, die jeweils die Frischluftöffnung 16 bzw. Umluftöffnung 18 verschließen können.

Die vom Gebläse 14 angesaugte Luft wird in dem Luftführungsgehäuse 12 durch einen Kühlwärmetauscher 22, beispielsweise ein Verdampfer eines Kältemittelkreises, geführt und in diesem abgekühlt. Luftstromabseitig des Kühlwärmetauschers 22 ist ein Heizungswärmetauscher 24 angeordnet, in dem die Luft erwärmt werden kann. Parallel zum Heizungswärmetauscher 24 ist ein Kaltluftbypass 26 vorgesehen, über den Kaltluft an dem Heizungswärmetauscher 24 vorbei in eine Kaltluft-/ Warmluftmischkammer 28 geführt werden kann. Über eine Temperaturmischklappe 30 kann das Verhältnis von kalter zu warmer Luft und damit die Lufttemperatur in der Luftmischkammer 28 eingestellt werden.

Alternativ könnte anstelle der beschriebenen luftseitigen Temperaturregelung auch eine wasserseitige Regelung vorgesehen sein, bei der der Heizungswärmetauscher permanent von der Luft durchströmt wird, also kein Kaltluftbypass vorhanden ist und zur Temperaturegelung der Wasserdurchsatz durch den Heizungswärmetauscher mit einem entsprechenden Ventil regelbar ist.

Von der Luftmischkammer 28 aus zweigen ein Defrostluftkanal 30, ein Belüftungskanal 32 und ein Fußraumluftkanal 34 ab, die über entsprechende Defrostluftklappe 36, Belüftungsklappe 38 und Fußraumluftklappe 40 verschließbar sind. Über die Luftkanäle 30, 32 und 34 wird die Luft zu im Fahrzeuginnenraum angeordnete Luftdüsen, wie Defrostdüsen, Mittenausströmern und Fußräumausströmern, geführt.

Sämtliche Klappen des Klimageräts sowie das Gebläse 14 sind über eine Steuereinheit 42 steuerbar und über Signalleitungen 44, 46, 48, 50, 52 und 54 mit dieser verbunden. Die Steuereinheit 42 weist beispielsweise drei, vorzugsweise im Armaturenbrett angeordnete, Bedienelemente 56, 58 und 60 auf, mit denen spezielle Vorgaben einstellbar sind. In dem dargestellten Ausführungsbeispiel ist das Bedienelement 56 als Luftverteilschalter oder Klappenschalter, das Bedienelement 58 als Temperaturwählschalter und das Bedienelement 60 als Gebläseleistungsschalter ausgebildet.

Bevorzugt enthält die Steuereinheit 42 einen Mikrocomputer, über den entsprechend den Einstellungen an den Bedienelementen 56, 58, 60 die einzelnen Luftklappen und das Gebläse angesteuert werden. Die Luftklappen selbst können über nicht dargestellte Schrittmotoren verstellt werden.

Das erfindungsgemäße Verfahren, das beispielsweise als Computerprogramm in der Steuereinheit 42 implementiert ist, arbeitet wie folgt:

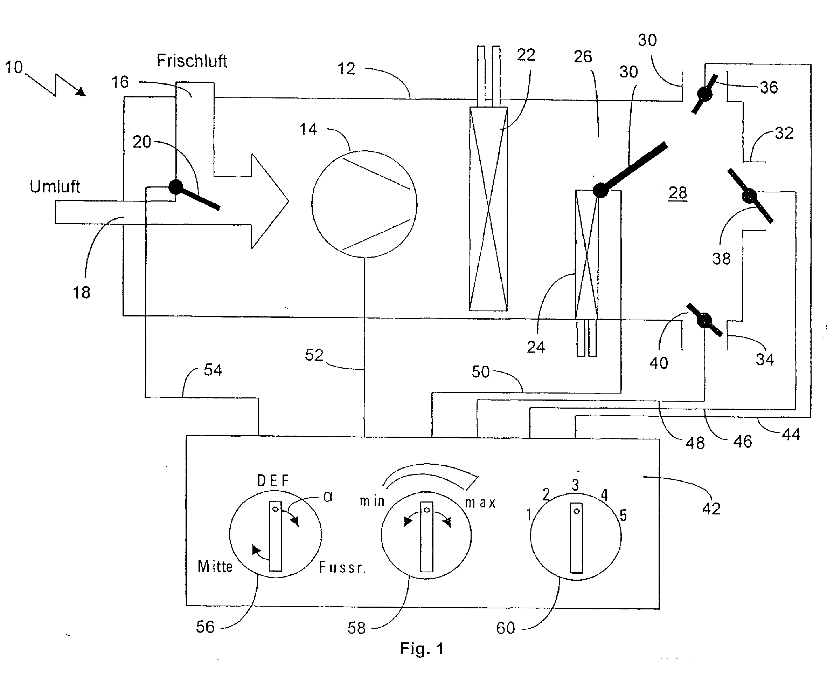

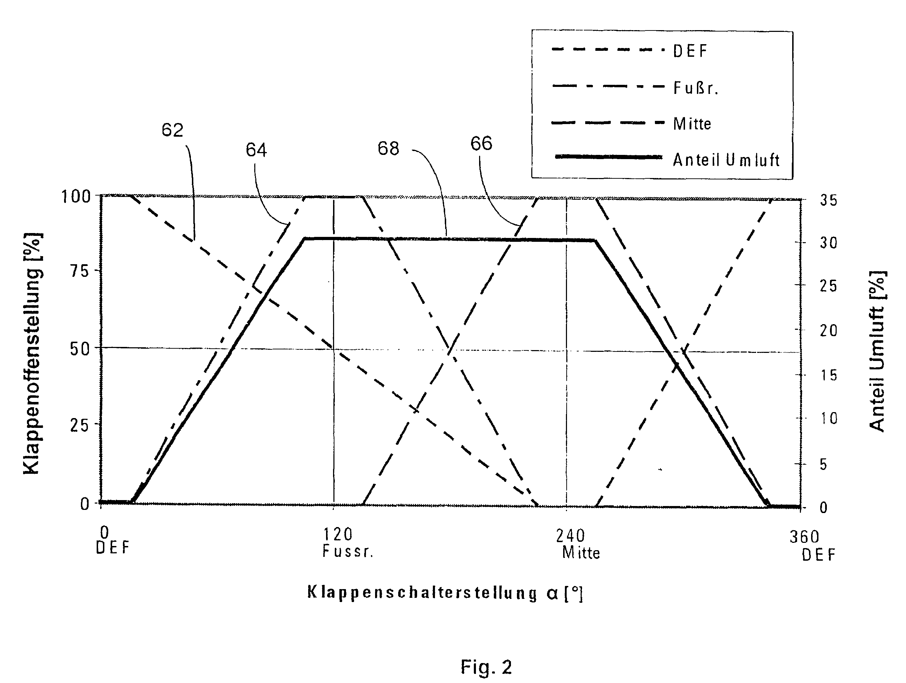

In Fig. 2 ist unter anderem ein typisches Klappenprogramm für eine Fahrzeugklimaanlage, wie sie in Fig. 1 dargestellt ist, abgebildet. Bei einer Klappenbedienschalterstellung von α = 0°, wie in Fig. 1 am Bedienschalter 56 dargestellt, sei beispielsweise ein Defrostmodus "DEF" eingestellt. In diesem Defrostmodus ist die Defrostluftklappe 36 vollständig geöffnet, die Fußraumluftklappe 40 und die Belüftungsluftklappe 38 sind vollständig geschlossen. Bei Drehen des Klappenbedienschalters 56 wird ausgehend von dieser Klappenstellung die Defrostluftklappe 36 langsam geschlossen, entsprechend der gestrichelten Linie 62 und die Fußraumluftklappe 40 langsam geöffnet, entsprechend der strichpunktierten Linie 64, bis der Klappenbedienschalter 56 etwa ein Drittel einer Volldrehung (α = 120°) zurückgelegt hat und ein Luftverteilmodus Fußraum "Fussr." erreicht ist, bei der die Fußraumluftklappe 40 vollständig geöffnet ist und somit ein Großteil der Luft in den Fußraum geführt wird. Bei weiterem Verdrehen des Klappenbedienschalters 56 wird die Fußraumluftklappe 40 wieder geschlossen und die Defrostluftklappe 36 weiter geschlossen und gleichzeitig die Belüftungsluftklappe 38 geöffnet, bis etwa α = 240°, in welcher Stellung jetzt die Belüftungsluftklappe 38 vollständig geöffnet ist und die beiden anderen Luftklappe 30 und 40 vollständig geschlossen sind, so daß die gesamte Luft zur Belüftung durch die Mittenausströmer in den Fahrzeuginnenraum geführt wird. Diese Stellung des Klappenbedienschalters 56 ist in Fig. 1 mit "Mitte" bezeichnet. Bei weiterem Verdrehen des Klappenbedienschalters 56 wird wieder langsam der Defrostluftmodus "DEF" angefahren, und die Belüftungsklappe 38 geschlossen und die Defrostluftklappe 36 langsam geöffnet, wobei die Fußraumluftklappe 40 geschlossen bleibt, bis bei α = 360° wieder der Ausgangszustand erreicht ist.

Erfindungsgemäß ist jetzt der Anteil der Umluft in Abhängigkeit der Stellung der einzelnen Luftstromsteuerelemente 36, 38 und 40 bestimmt, wie dies beispielsweise anhand der Linie 68 in Fig. 2 dargestellt ist. Die Linie 68 gibt den Umluftanteil in % dar, wobei der Linie 68 die Skala an der rechten Seite der Graphik entspricht. Somit wird im Defrostluftmodus "DEF" keine Umluft der angesaugten Luft beigemischt und im Fußraummodus "Fussr." (α = 120°) und Belüftungsmodus "Mitte" (α = 240°) ein maximaler Umluftanteil von beispielsweise 30 % eingestellt. Zwischen dem Defrostluftmodus und dem Fußraummodus wird der Umluftanteil kontinuierlich erhöht und ausgehend vom Belüftungsmodus bei Einstellung des Defrostluftmodus kontinuierlich erniedrigt.

Der maximale Umluftanteil, der in Fig. 2 ca. 30 % beträgt, kann abhängig von verschiedenen Parametern eingestellt sein. Beispielsweise kann dieser Umluftanteil erniedrigt werden, wenn mehrere Fahrzeuginsassen sich in Fahrzeug befinden, was beispielsweise automatisch durch Sitzbelegungssensoren festgestellt werden könnte, die dann gegebenenfalls über Signalleitungen mit dem Steuergerät verbunden sind.

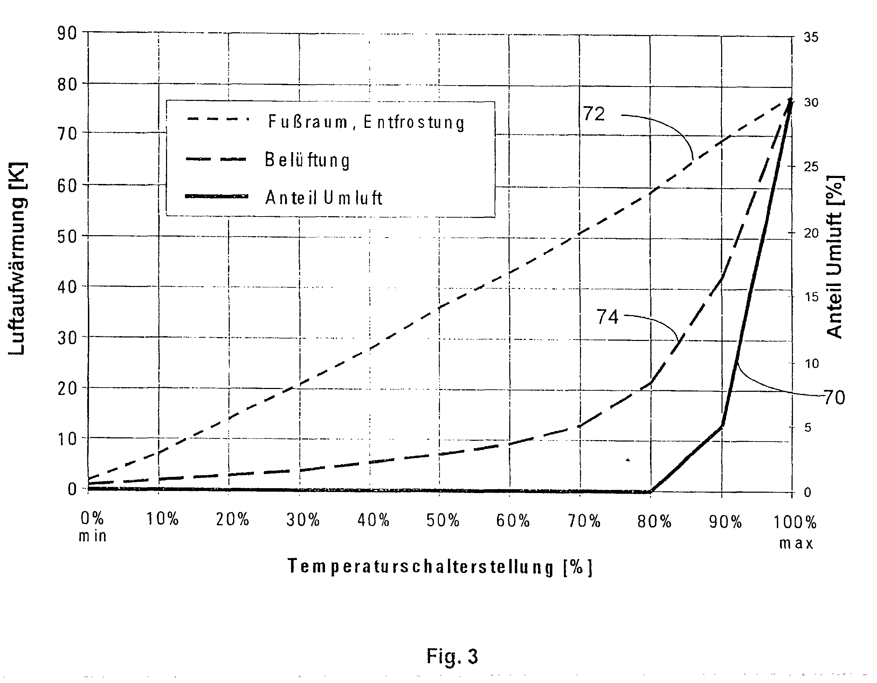

Des weiteren kann der Umluftanteil auch zusätzlich in Abhängigkeit der Heizleistung geregelt sein. Wenn der Temperaturschalter 58 auf maximale Kälte "min", entsprechend 0 % in Fig. 3, eingestellt ist, ist vorgesehen, daß ausschließlich Frischluft in den Fahrzeuginnenraum zugeführt wird. Wenn der Temperaturschalter 58 auf maximales Heizen "max" eingestellt ist (100 % in Fig. 3), wird der maximale Umluftanteil beigemischt. Zwischen 0 und 80 %, also bei geringerer Heizleistung, wird ebenfalls ausschließlich Frischluft eingesetzt, und erst bei hohen Heizleistungen zwischen 80 und 100 % wird der Umluftanteil kontinuierlich erhöht, beispielsweise entsprechend einer Kurve 70 in Fig. 3. Mit dieser Regelung wird erreicht, daß insbesondere im Kaltstartbetrieb der Fahrzeuginnenraum schnell erwärmt werden kann, wobei nach der Kaltstartphase, wenn nicht mehr die volle Heizleistung erforderlich ist, der Fahrzeuginnenraum, durch Zuführung von ausschließlich Frischluft, wieder getrocknet wird. In Fig. 3 sind der Vollständigkeit halber noch zwei Kurven 72 und 74 angegeben, die die Luftaufwärmung der dem Fußraum bzw. der Defrostung zugeführten Luft (72) und der den Mittenausströmern zugeführten Luft (74) dargestellt.

In Weiterbildung der Erfindung kann der Umluftanteil auch in Abhängigkeit der Gebläseleistung geregelt werden, wobei bei geringer Gebläseleistung, beispielsweise zwischen 0 und 40 %, kein Umluftanteil beigemischt wird, damit in diesem Fall, während der Fahrt und bedingt durch den Staudruck im Frischluftkanal, keine Frischluft über den Umluftkanal in das Fahrzeuginnere eindringen kann. Bei höherer Gebläseleistung, beispielsweise zwischen 40 und 70 %, wird der Umluftanteil entsprechend der gestrichelten Linie 76 kontinuierlich bis auf einen Maximalwert (30 %) eingestellt und ab dieser Gebläseleistung konstant beibehalten. Sollte in der Frischluftzufuhr eine Staudruckregelung, beispielsweise in Form einer Staudruckklappe vorgesehen sein, kann bereits bei niedriger Gebläseleistung, z.B. 20 %, entsprechend der gestrichelten Kurve 78, ein Umluftanteil zugemischt werden.

Da der Staudruck abhängig ist von der Fahrgeschwindigkeit kann vorteilhafterweise der Umluftanteil auch in Abhängigkeit der Geschwindigkeit geregelt werden. Bei geringer Geschwindigkeit und damit geringem Staudruck könnte bereits bei kleinerer Gebläseleistung, beispielsweise <20%, ein Umluftanteil beigemischt werden.

## Patentansprüche

1. Verfahren zur Mischluftregelung in einer Heizungs- oder Klimaanlage eines Kraftfahrzeuges, bei dem einem Luftführungsgehäuse (12) Umluft und/oder Frischluft zugeführt und in dem Gehäuse (12) temperiert wird und über Luftstromsteuerelemente (36, 38, 40) auf unterschiedliche Luftausströmer verteilt und einem Innenraum zugeführt wird, **dadurch gekennzeichnet, dass** der Umluftanteil in Abhängigkeit der Stellung der Luftstromsteuerelemente (36, 38, 40) für die Luftverteilung, Gebläsespannung oder Heizleistung bestimmt wird.

2. Verfahren nach Anspruch 1, **dadurch gekennzeichnet, dass** nur in einem Defrostmodus, in dem der gößte Teil der konditionierten Luft an eine Frontscheibe geführt wird, ausschließlich Frischluft angesaugt wird.

3. Verfahren nach Anspruch 1 oder 2, **dadurch gekennzeichnet, dass** der maximale Umluftanteil abhängig von Parametern, wie Anzahl der Fahrzeuginsassen etc., gewählt wird.

4. Verfahren nach einem der vorhergehenden Ansprüche, **dadurch gekennzeichnet, dass** der Umluftanteil in Abhängigkeit einer vorgebbaren Heizleistung geregelt wird.

5. Verfahren nach Anspruch 4, **dadurch gekennzeichnet, dass** erst ab etwa 80% der maximalen Heizleistung der zu konditionierenden Luft Umluft beigemischt wird.

6. Verfahren nach Anspruch 4 oder 5, **dadurch gekennzeichnet, dass** bei maximaler Heizleistung der maximale Umluftanteil beigemischt wird.

7. Verfahren nach einem der vorhergehenden Ansprüche, **dadurch gekennzeichnet, dass** bei kleiner Gebläseleistung kein Umluftanteil beigemischt wird und mit größer werdender Gebläseleistung ein höherer Umluftanteil bei Bedarf beigemischt wird.

8. Verfahren nach Anspruch 7, **dadurch gekennzeichnet, dass** in Abhängigkeit der Fahrgeschwindigkeit ein Umluftanteil bei Bedarf beigemischt wird.

9. Anordnung zur Durchführung des Verfahrens nach einem der vorhergehenden Ansprüche mit einem Luftführungsgehäuse (12) mit wenigstens einer Umluft- (18) und wenigstens einer Frischluftansaugöffnung (16), die über wenigstens eine Umluft/Frischluft-Klappe (20) verschließbar sind, einem Gebläse (14), wenigstens einem Wärmetauscher (24) zur Konditionierung der Luft, Luftstromsteuerelementen (36, 38, 40) zur Führung der Luft zu Ausströmem, einer Steuereinheit (42) über die die einzelnen Komponenten (14, 20, 30, 36, 38, 40) der Heizungs- oder Klimaanlage steuerbar sind, **dadurch gekennzeichnet, dass** die Steuereinheit (42) derart ausgebildet ist, beispielsweise durch Implementierung eines Computerprogramms, dass von der Steuereinheit (42) ausgehende Signale zur Öffnung der Umluftansaugöffnung (18) abhängig sind von den Stellungen der Luftstromsteuerelemente (36, 38, 40) für die Luftverkeilung, Gebläsespannung oder Heizleistung.

## Claims

1. Method for blend air control in a heating or air conditioning system of a motor vehicle, wherein an air duct housing (12) is supplied with recirculated and/or fresh air, which is temperature-controlled in the housing (12), distributed via airflow control elements (36, 38, 40) to various air outlets and fed into a passenger compartment, **characterised in that** the proportion of recirculated air is determined in dependence on the position of the airflow control elements (36, 38, 40) for air distribution, on fan voltage or heat output.

2. Method according to claim 1, **characterised in that** fresh air is exclusively drawn in only in a defroster mode, in which the major part of the conditioned air is directed to a windscreen.

3. Method according to claim 1 or 2, **characterised in that** the maximum proportion of recirculated air depends on parameters such as the number of passengers etc.

4. Method according to any of the preceding claims, **characterised in that** the proportion of recirculated air is controlled in dependence on a presettable heat output.

5. Method according to claim 4, **characterised in that** recirculated air is added to the air to be conditioned only from approximately 80% of maximum heat output.

6. Method according to claim 4 and 5, **characterised in that** the maximum proportion of recirculated air is added at maximum heat output.

7. Method according to any of the preceding claims, **characterised in that** no recirculated air is added at low fan output and a higher proportion of recirculated air is added at increasing fan output if required.

8. Method according to claim 7, **characterised in that** a proportion of recirculated air is added in dependence on vehicle speed if required.

9. Arrangement for the execution of the method according to any of the preceding claims, with an air duct housing (12) with at least one inlet for recirculated air (18) and at least one inlet for fresh air (16), which can be sealed by a recirculated/fresh air door (20), with a fan (14), with at least one heat exchanger (24) for conditioning the air, with airflow control elements (36, 38, 40) for guiding the air to outlets, and with a control unit (42) for the control of the individual components (14, 20, 30, 36, 3 8, 40) of the heating or air conditioning system, **characterised in that** the control unit (42) is, for example by implementing a computer programme, so designed that signals from the control unit (42) for opening the recirculated air inlet (18) are dependent on the position of the airflow control elements (36, 38, 40) for air distribution, on fan voltage or heat output.

## Revendications

1. Procédé de régulation du mélange d'air dans une installation de chauffage ou de climatisation d'un véhicule, dans lequel de l'air recyclé et/ou de l'air frais est conduit dans une chambre de ventilation (12) et tempéré dans la chambre (12) et distribué à l'aide d'éléments déflecteurs d'air (36, 38, 40) sur différents dispositifs éjecteurs d'air et alimenté dans un espace interne, **caractérisé en ce que** la portion d'air recyclé est définie en fonction de la position des éléments déflecteurs d'air (36, 38, 40) pour la distribution de l'air, la force de soufflage ou la puissance de chauffage.

2. Procédé selon la revendication 1, **caractérisé en ce que** seul de l'air frais est aspiré uniquement dans un mode de dégivrage, dans lequel la plus grande portion de l'air conditionné est amenée sur la face de pare-brise.

3. Procédé selon la revendication 1 ou 2, **caractérisé en ce que** la portion maximale d'air recyclé est sélectionnée en fonction de paramètres tels que le nombre d'occupants dans le véhicule, et d'autres paramètres.

4. Procédé selon l'une quelconque des revendications précédentes, **caractérisé en ce que** la portion d'air recyclée est régulée en fonction d'une puissance de chauffage choisie.

5. Procédé selon la revendication 4, **caractérisé en ce que** c'est seulement à partir de l'atteinte d'environ 80% de la puissance maximale de chauffage que de l'air recyclé est ajouté au mélange de l'air à conditionner.

6. Procédé selon la revendication 4 ou 5, **caractérisé en ce que** la portion maximale d'air recyclé est ajoutée au mélange quand la puissance de chauffage est maximale.

7. Procédé selon l'une quelconque des revendications précédentes, **caractérisé en ce qu'**aucune portion d'air recyclé n'est ajoutée au mélange lorsque la puissance de soufflage est faible et une portion d'air recyclé plus importante est, au besoin, ajoutée au mélange en même temps qu'augmente la puissance de soufflage.

8. Procédé selon la revendication 7, **caractérisé en ce qu'**une portion d'air recyclé est, au besoin, ajoutée au mélange en fonction de la vitesse du véhicule.

9. Dispositif pour réaliser le procédé selon l'une quelconque des revendications précédentes, comportant une chambre de ventilation (12) avec au moins un orifice d'aspiration d'air recyclé (18) et au moins un orifice d'aspiration d'air frais (16), qui peuvent être fermés à l'aide d'au moins un clapet d'air recyclé / d'air frais (20), une soufflerie (14), au moins un échangeur de chaleur (24) pour le conditionnement de l'air, des éléments déflecteurs d'air (36, 38, 40) pour amener l'air sur les dispositifs éjecteurs, une unité de commande (42) à l'aide de laquelle les composants individuels (14, 20, 30, 36, 38, 40) de l'installation de chauffage ou climatisation peuvent être commandés, **caractérisé en ce que** l'unité de commande (42) est conçue de telle sorte que, par exemple au moyen de l'implémentation d'un programme informatique, des signaux délivrés par l'unité de commande (42) pour ouvrir l'orifice d'aspiration d'air recyclé (18) soient dépendants des positions des éléments déflecteurs d'air (36, 38, 40) pour la distribution de l'air, la force de soufflage ou la puissance de chauffage.
